# EUROPÄISCHE PATENTSCHRIFT

(11) **EP 3 334 252 B1**
(45) Veröffentlichungstag und Bekanntmachung des Hinweises auf die Patenterteilung: **10.03.2021**
(21) Anmeldenummer: 17190026.9
(22) Anmeldetag: 08.09.2017
(51) Int. Cl.: H05B 33/08

(54) **LINEARLICHTEINHEIT SOWIE VERFAHREN ZUM DIMMEN EINER SOLCHEN LINEARLICHTEINHEIT**
LINEAR LIGHT UNIT AND METHOD FOR OPERATING SUCH A LINEAR LIGHT UNIT
UNITÉ D'ÉCLAIRAGE LINÉAIRE AINSI QUE SON PROCÉDÉ DE GRADATION DE LA LUMINOSITÉ

(30) Priorität: 08.12.2016 DE 102016123747
(43) Veröffentlichungstag der Anmeldung: 13.06.2018
(73) Patentinhaber: Insta GmbH, 58509 Lüdenscheid (DE)
(72) Erfinder: Grosch, Volker, 45549 Sprockhövel (DE)

(56) Entgegenhaltungen:
- EP-A2- 2 302 982
- WO-A1-2015/036551
- US-A1- 2009 302 776
- US-A1- 2012 229 030
- US-A1- 2014 300 278

## Beschreibung

Die Erfindung betrifft eine Linearlichteinheit mit mehreren, über elektrische Leitungen in Reihe geschalteten, durch jeweils eine Konstantstromquelle mit Gleichstrom versorgten Lichtquellenmodulen, wobei eine Leitung die plus-Leitung, und eine weitere die minus-Leitung und noch eine weitere eine Steuerleitung ist, die den Eingang der Konstantstromquelle jedes Lichtquellenmoduls beaufschlagt. Ferner betrifft die Erfindung ein Verfahren zum Dimmen einer solchen Linearlichteinheit.

Bei Linearlichteinheiten handelt es sich um Beleuchtungssysteme, bei denen eine Vielzahl von einzelnen Lichtquellen in Reihe hintereinander geschaltet sind. Eine Vielzahl derartiger Lichtquellen sind typischerweise in einem Lichtquellenmodul zusammengefasst. Zahlreiche Lichtquellenmodule können hintereinander geschaltet sein. Auf diese Weise lassen sich starre oder auch flexible Leuchtbänder oder Lichterketten ausbilden. Eingesetzt werden diese zu Beleuchtungszwecken, oftmals zur Beleuchtung eines Gebäudes (Architekturbeleuchtung) und auch zur Akzentuierung und somit zum Bereitstellen eines bestimmten Lichtdesigns.

Um den Verdrahtungsaufwand gering zu halten, sind die Lichtquellen einer solchen Linearlichteinheit in Reihe geschaltet. Bei den Lichtquellen handelt es sich um solche, die mit Gleichstrom betrieben werden. Aus diesem Grunde dienen zwei der drei Leitungen zur Spannungsversorgung der Last (der Lichtquellenmodule), während die dritte Leitung eine Steuerleitung darstellt. Jeder Reihenschaltung von Lichtquelle ist eine geregelte Stromquelle (Konstantstromquelle) zugeordnet, um Spannungsabfälle über die in Reihe geschalteten Zuleitungen auf den Versorgungsleitungen zu kompensieren. Hierdurch wird ein gewisser Wirkungsgradverlust hingenommen, jedoch wird über die Anzahl der in Reihe geschalteten Lichtquellen einer solchen Linearlichteinheit derselbe Lichtstrom abgegeben. Mithin ist hierdurch eine ansonsten eintretende Reduzierung des abgegebenen Lichtstroms zum Ende der Reihenschaltung hin vermieden. Die Steuerleitung liegt an den Eingängen der Steuereingänge der Konstantstromquellen an.

Wenn eine solche Linearlichteinheit gedimmt werden soll, bedient man sich einer Pulsweitenmodulation der Versorgungsspannung. Auf diese Weise ist es möglich, über sämtliche Lichtquelleneinheiten der Linearlichteinheit dieselbe Dimmung zu erzeugen. Zudem ist ein Dimmen über eine Pulsweitenmodulation der Versorgungsspannung mit einem geringen Aufwand verbunden. Allerdings müssen bei diesem Dimmverfahren Nachteile in Kauf genommen werden. Zum Einen ist die Reaktionsgeschwindigkeit begrenzt. Grund hierfür sind die zahlreichen in Reihe geschalteten Konstantstromquellen, die mitunter spürbare Reaktionszeiten auf das Ausschalten der Versorgungsspannung haben, weshalb Dimmvorgänge nur mit einer niedrigen Pulsweitenmodulationsfrequenz realisiert werden können. Zudem wurde festgestellt, dass pulsweitenmodulierte Lichtquellen zu einem Unwohlsein bei Menschen beitragen können. Die typischerweise als Lichtquellen eingesetzten LEDs geben trägheitslos die Stromschwankungen als Lichtstromschwankungen weiter. Mitunter können pulsweitenmodulierte Lichtquellen sogar als einzelne Ein- und Ausschaltimpulse wahrgenommen werden. Unter einem pulsweitenmodulierten Lichtstrom können Interferenzen mit Displays, beispielsweise an Mobiltelefonen oder dergleichen auftreten, die vom Benutzer wahrgenommen und als störend empfunden werden.

Aus WO 2015/036551 A1 ist ein Controller zum Kontrollieren des LED-Stroms einer Lichteinheit bekannt, der sich der oben beschriebenen Pulsweitenmodulation bedient, sodass die genannten Nachteile hinsichtlich Reaktionsgeschwindigkeit und Unwohlsein bei Menschen nicht vermieden werden können.

US 2014/0300278 A1 offenbart einen selbst justierenden Lichttreiber zum Betreiben von Lichtquellen. Dieser ist dazu ausgerichtet, die Temperatur der LED zu verringern und somit die Lebenszeit zu erhöhen. Die Fragestellung der Dimmung wird bei dieser Patentanmeldung jedoch nicht adressiert.

Weiterhin ist aus EP 2 302 982 A2 eine dimmbare Lichterkette und die hierfür benötigte Schaltung bekannt, wobei die Lichterkette in einfacher Weise gedimmt werden kann. Eine Kompensation des Spannungsabfalls auf der Steuerleitung der in Reihe geschalteten Lichtquellenmodule wird allerdings nicht verwirklicht, sodass keine gleichmäßige Beleuchtung der in Reihe geschalteten Lichtquellenmodule sichergestellt ist.

Ausgehend von diesem diskutierten Stand der Technik liegt der Erfindung daher die Aufgabe zugrunde, eine Linearlichteinheit sowie ein Verfahren zum Betreiben einer Linearlichteinheit vorzuschlagen, die bzw. mit dem ein Dimmen, ohne die Nachteile einer Pulsweitenmodulation in Kauf zu nehmen, und, ohne den Verdrahtungsaufwand zu erhöhen, mit einfachen Mitteln möglich ist.

Gelöst wird die auf die Linearlichteinheit bezogene Aufgabe erfindungsgemäß durch eine Linearlichteinheit der eingangs genannten Art, bei der jedes Lichtquellenmodul eine Kompensatorschaltung zum Kompensieren eines Spannungsabfalls auf der Steuerleitung an den in Reihe geschalteten Lichtquellenmodulen aufweist, welche Kompensatorschaltung ein Spannungsmessglied zum Ermitteln der am Lichtquellenmodul aktuell anliegenden IST-Versorgungsspannung und ein Korrekturglied zum Korrigieren der IST-Steuerspannung in Abhängigkeit von der Differenz zwischen der IST-Versorgungsspannung und der nominalen SOLL-Versorgungsspannung aufweist.

Die verfahrensbezogene Aufgabe wird durch ein eingangs genanntes, gattungsgemäßes Verfahren gelöst, bei der in jedem Lichtquellenmodul ein Spannungsabfall auf der Steuerleitung kompensiert wird, indem die an dem Lichtquellenmodul anliegende IST-Versorgungsspannung erfasst, die Differenz zwischen der IST-Versorgungsspannung und der nominalen SOLL-Versorgungsspannung ermittelt und unter Zugrundelegung dieser Differenz die IST-Spannung auf der Steuerleitung basierend auf der festgestellten Differenz korrigiert wird.

Bei dem vorstehenden Lösungskonzept wird grundsätzlich von einer feststehenden bzw. konstanten Versorgungsspannung ausgegangen, an deren Betrieb die Lichtquellenmodule angepasst sind. Jedes Lichtquellenmodul umfasst eine Kompensatorschaltung, mit der die Steuerspannung in der Steuerleitung um den Spannungsabfall korrigiert wird, damit an dem Steuerleitungseingang der Konstantstromquelle in allen Lichtquellenmodulen eine gleiche Spannung anliegt. In geschickter Weise wird bei diesem Konzept der Umstand genutzt, dass die Steuerspannung über die Masseleitung der Spannungsversorgung abgeführt wird. Der Spannungsabfall in der Steuerspannung auf der Steuerleitung steht daher in einem eindeutigen Bezug zu dem Spannungsabfall in der Reihenschaltung der Lichtquellenmodule in der Versorgungsspannung. Der Spannungsabfall an jedem beliebigen Lichtquellenmodul in der Reihenschaltung derselben in der Linearlichteinheit kann auf einfache Weise ermittelt werden, indem die an dem Lichtquellenmodul anliegende Versorgungsspannung - die IST-Versorgungsspannung - erfasst und die Differenz zur nominalen SOLL-Versorgungsspannung bestimmt wird. Die SOLL-Versorgungsspannung ist bekannt. Die auf der Steuerleitung anliegende Steuerspannung am Eingang eines Lichtquellenmoduls wird in Abhängigkeit von dem Anteil des Spannungsabfalls über die Masseleitung korrigiert. Dieser Anteil ist abhängig von der Symmetrie in der Auslegung der Linearlichteinheit. In aller Regel wird eine solche Linearlichteinheit symmetrisch bzgl. der plus-Versorgungsleitung und der minus-Versorgungsleitung, d.h. insbesondere mit gleichen Querschnitten, ausgelegt sein. In einem solchen Fall wird die auf der Steuerleitung anliegende Steuerspannung am Eingang jedes Lichtquellenmoduls um die Hälfte des festgestellten Spannungsabfalls in der Versorgungsspannung angehoben, da der Spannungsabfall symmetrisch über beide Versorgungsleitungen erfolgt. Zu diesem Zweck verfügt jedes Lichtquellenmodul der Linearlichteinheit über ein Korrekturglied. Zum Durchführen der Vergleichs- bzw. Differenzoperationen kann als Rechenglied ein handelsüblicher, analog arbeitender Operationsverstärker eingesetzt werden.

In einer Weiterbildung der Linearlichteinheit ist vorgesehen, dass die Lichtquellenmodule zudem ein Korrekturglied zum Beschränken der Ausgangsspannung des Rechengliedes auf einen zulässigen Wertebereich aufweist.

In noch einer Weiterbildung ist vorgesehen, dass an den Ausgang des Rechengliedes, also beispielsweise an den Ausgang eines Operationsverstärkers, ein Dynamikglied zum Beeinflussen des Dynamikbereiches des Operationsverstärkers angeschlossen ist.

Nachfolgend ist die Erfindung anhand von Ausführungsbeispielen unter Bezugnahme auf die beigefügten Figuren beschrieben. Es zeigen:

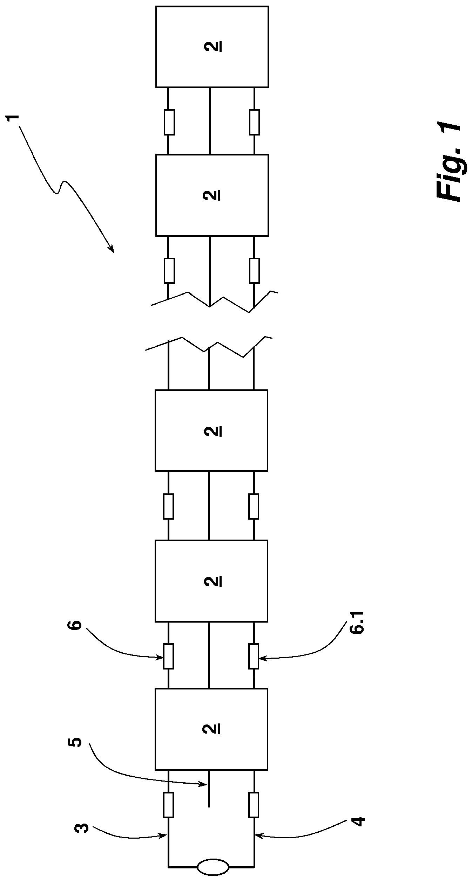

- **Fig. 1:**: Eine schematisierte Darstellung nach Art eines Blockschaltbildes einer Linearlichteinheit mit einer Vielzahl von in Reihe geschalteten Lichtquellenmodulen,
- **Fig. 2:**: eine Schaltungsanordnung eines Lichtquellenmoduls gemäß der Erfindung in einer ersten Ausgestaltung und
- **Fig. 3:**: eine Schaltungsanordnung eines Lichtquellenmoduls gemäß der Erfindung in einer weiteren Ausbaustufe.

Eine Linearlichteinheit 1 umfasst eine Vielzahl von in Reihe zueinander geschalteter Lichtquellenmodule 2. Die Lichtquellenmodule 2 sind über eine Drei-Draht-Verdrahtung miteinander verbunden. Davon sind zwei Leitungen 3, 4 für die Spannungsversorgung vorgesehen. Dabei stellt die Leitung 3 die plus-Leitung und die Leitung 4 die minus-Leitung dar. Die minus-Leitung 3 bildet die Masseleitung. Eine dritte Leitung 5 ist eine Steuerleitung, die den Steuereingang einer in jedem Lichtquellenmodul 2 vorhandenen Konstantstromquelle beaufschlagt.

Zwischen jedem Lichtquellenmodul 2 ist zur Darstellung der in der Praxis eintretenden, nicht verhinderbaren Drahtverluste in die Versorgungsleitungen 3, 4 jeweils ein Widerstand 6, 6.1 eingeschaltet. Die Widerstände 6, 6.1 sind in der Praxis tatsächlich nicht vorhanden.

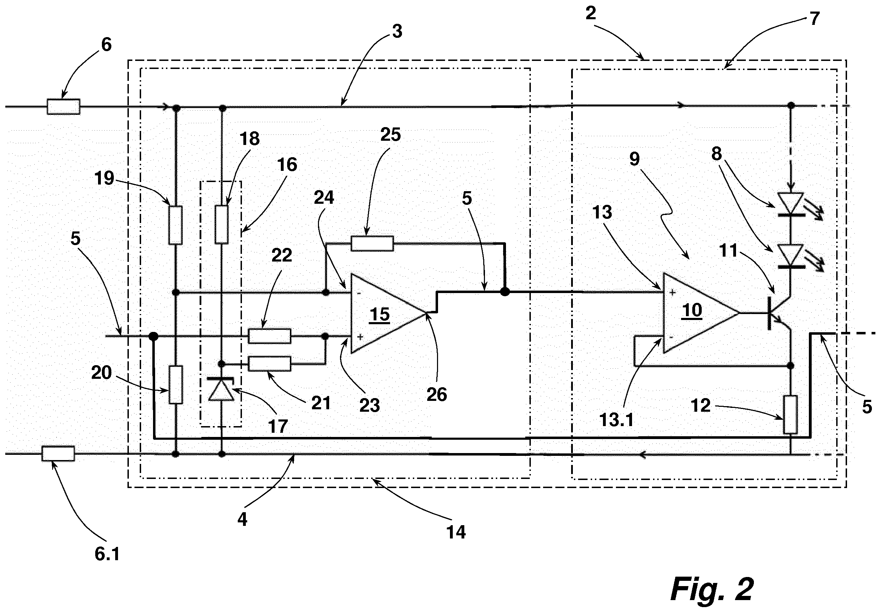

Nachstehend ist ein Lichtquellenmodul 2 unter Verweis auf die in Figur 2 dargestellte Schaltung näher erläutert. Das Lichtquellenmodul 2 umfasst eine Lichtquellenschaltung 7. Die Lichtquellenschaltung 7 umfasst zumindest eine, typischerweise mehrere einzelne Lichtquellen 8, die bei dem dargestellten Ausführungsbeispiel als LEDs ausgeführt sind. Neben den Lichtquellen 8 umfasst die Lichtquellenschaltung 7 eine Konstantstromquelle 9, die bei dem dargestellten Ausführungsbeispiel durch einen Operationsverstärker 10, einen Transistor 11 sowie einen Widerstand 12 gebildet ist. Die LEDs 8 sind in Bezug auf die Versorgungsleitung 3 (plus) in Durchlassrichtung an den Kollektor des Transistors 11 angeschlossen. Die Steuerspannung liegt an dem nicht-invertierenden Eingang 13 des Operationsverstärkers 10 an. Der invertierte Eingang 13.1 des Operationsverstärkers 10 ist an den Emitterast des Transistors 11 angeschlossen. Die Lichtquellenschaltung 7 entspricht somit einer an sich für diese Zwecke bekannten Lichtquellenschaltung.

Das Lichtquellenmodul 2 umfasst neben der Lichtquellenschaltung 7 eine Kompensatorschaltung 14. Die Kompensatorschaltung 14 dient zum Anheben der auf der Steuerleitung 5 eingangsseitig anliegenden Steuerspannung, um den Spannungsabfall infolge der dem Lichtquellenmodul 2 in der Reihenschaltung vorgeschalteten Lichtquellenmodule zu kompensieren. Teil der Kompensatorschaltung 14 ist ein handelsüblicher Operationsverstärker 15. Dieser ist ausgelegt, um eine Referenzspannung zu erzeugen, die bei dem dargestellten Ausführungsbeispiel der halben nominalen SOLL-Versorgungsspannung entspricht. Bei dem dargestellten Ausführungsbeispiel ist die Referenzspannung 50% der nominalen SOLL-Versorungsspannung, da die Verdrahtung symmetrisch ausgeführt ist. Genutzt wird, wie sich dieses auch aus den nachfolgenden Ausführungen ergibt, der Umstand, dass die Steuerspannung über die Masseleitung (Versorgungsleitung 3) abgeführt wird und ein Spannungsabfall aufgrund der Symmetrie in der Verdrahtung auf beiden Versorgungsleitungen 3, 4 zu gleichen Anteilen erfolgt. Der zusätzlich über Masse (Versorgungsleitung 3) abgeführte Strom der Steuerleitung 5 kann hierbei bei entsprechend hochromiger Ausführung vernachlässigt werden. Die Referenzspannung wird aus einer Konstantspannungsquelle 16 gebildet, die bei dem dargestellten Ausführungsbeispiel über eine Zener-Diode 17 und einen Widerstand 18 gebildet ist. Teil der Kompensatorschaltung 14 ist desweiteren ein durch die Widerstände 19, 20 gebildeter Spannungsteiler. Die Referenzspannung der Konstantspannungsquelle 16 wird über einen Widerstand 21 zusammen mit der auf der Steuerleitung 5 eingangsseitig anliegenden Steuerspannung unter Zwischenschaltung eines Widerstandes 22 dem nicht-invertierenden Eingang 23 des Operationsverstärkers 15 zugeführt. An den invertierenden Eingang 24 wird dem Operationsverstärker 15 ein Abbild der nominalen SOLL-Versorgungsspannung zugeführt. Die daran beteiligten Widerstände des Spannungsteilers - die Widerstände 19, 20 - sowie ein für die Gegenkopplung vorgesehener Widerstand 25 sind so eingestellt, dass durch den Operationsverstärker 15 von dem am nicht-invertierenden Eingang 23 anliegenden Signal die halbe nominale SOLL-Versorgungsspannung subtrahiert wird. Am Ausgang 26 des Operationsverstärkers 15 liegt sodann eine Spannung an, die der ursprünglichen Steuerspannung ohne durch die Reihenschaltung bedingte Spannungsabfälle entspricht. Die Steuerleitung 5 ist an den Ausgang 26 des Operationsverstärkers 15 angeschlossen und verbindet diesen mit dem nicht-invertierenden Eingang 13 des Operationsverstärkers 10 der Lichtquellenschaltung 7. Zugleich wird in einem Leitungsast die Steuerleitung 5 zu dem nachfolgenden Lichtquellenmodul 2 geführt.

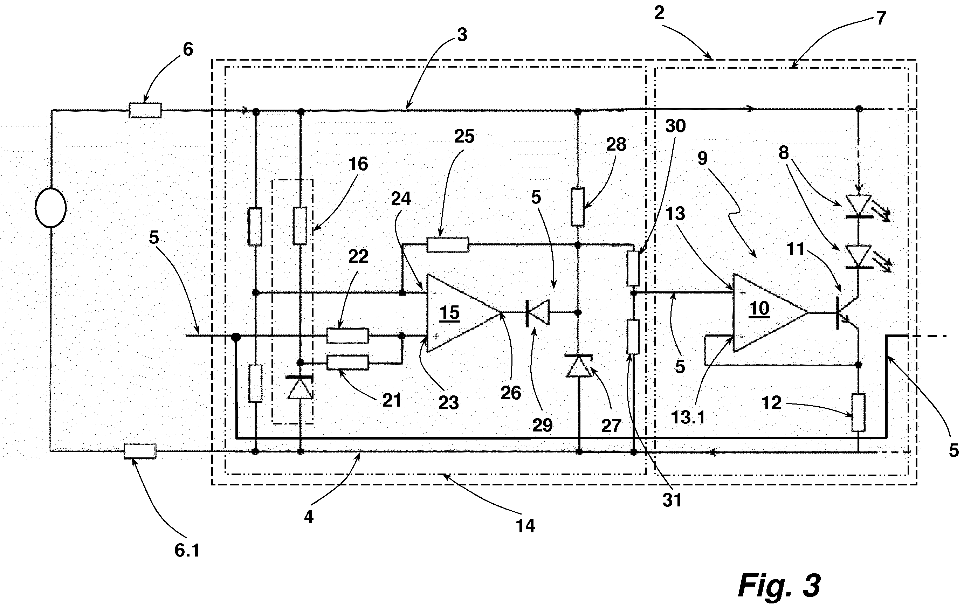

Figur 3 zeigt das Lichtquellenmodul 2 in einer weiteren Ausbaustufe, und zwar mit einem Korrekturglied zum Beschränken der Ausgangsspannung des Operationsverstärkers 15 auf einen zulässigen Wertebereich. Bei dem Ausführungsbeispiel der Figur 3 wird der Operationsverstärker 15 nicht direkt durch den Widerstand 25 gegengekoppelt. Über das Korrekturglied wird eine Spannung aufgebaut. Die Korrekturschaltung des Korrekturgliedes umfasst eine Zener-Diode 27 und einen Widerstand 28, die prinzipiell parallel zu der Konstantspannungsquelle 16 geschaltet sind. Über den Widerstand 28 wird an der Diode 27 eine Spannung aufgebaut. Mithilfe einer am Ausgang 26 des Operationsverstärkers 15 angeordneten Diode 29 kann der Ausgang des Operationsverstärkers 15 die Spannung an der Zener-Diode 27 so belasten, dass die gewünschte Ausgangsspannung entsteht, dies aber nur bis zu einer untersten Schwelle, die der Flussspannung der Diode 29 entspricht. Eine Verfälschung der am Ausgang des Operationsverstärkers 15 anliegenden Spannung erfolgt hierdurch nicht, da die Diode 29 mit im Gegenkopplungskreis liegt und auf diese Weise Spannungsabfälle kompensiert werden. Auf diese Weise ist die Ausgangsspannung des Operationsverstärkers 15 auf eine Minimalspannung begrenzt.

Zur Begrenzung der Maximalspannung dient ebenfalls die Zener-Diode 27. Das Überschreiten einer Maximalspannung wird durch die Diode 29 verhindert, indem durch den Ausgang 26 des Operationsverstärkers 15 Strom in die Zener-Diode 27 getrieben wird und hierdurch auch bei Erreichen der Schwellspannung der Zener-Diode 27 und den Verbrauch des Betriebsstroms dieser Diode 27 durch den Widerstand 28 der Ausgangsstrom begrenzt ist.

In noch einer weiteren Ausbaustufe, die ebenfalls in dem Lichtquellenmodul der Figur 3 gezeigt ist, verfügt die Kompensatorschaltung 14 zudem über ein Dynamikglied, bereitgestellt durch zwei Widerstände 30, 31, die an den Gegenkopplungswiderstand 25 und das Korrekturglied angeschlossen sind.

### Bezugszeichenliste

- 1: Linearlichteinheit
- 2: Lichtquellenmodul
- 3: Versorgungsleitung
- 4: Versorgungsleitung
- 5: Steuerleitung
- 6,6.1: Widerstand
- 7: Lichtquellenschaltung
- 8: Lichtquelle
- 9: Konstantstromquelle
- 10: Operationsverstärker
- 11: Transistor
- 12: Widerstand
- 13, 13.1: Eingang
- 14: Kompensatorschaltung
- 15: Operationsverstärker
- 16: Konstantspannungsquelle
- 17: Zener-Diode
- 18: Widerstand
- 19: Widerstand
- 20: Widerstand
- 21: Widerstand
- 22: Widerstand
- 23: Eingang
- 24: Eingang
- 25: Widerstand
- 26: Ausgang
- 27: Zener-Diode
- 28: Widerstand
- 29: Diode
- 30: Widerstand
- 31: Widerstand

## Patentansprüche

1. Linearlichteinheit mit mehreren, über elektrische Leitungen (3, 4, 5) in Reihe geschalteten, durch jeweils eine Konstantstromquelle (10, 11) mit Gleichstrom versorgten Lichtquellenmodulen (2), wobei eine Leitung (4) die plus-Leitung, und eine weitere die minus-Leitung (3) und noch eine weitere eine Steuerleitung (5) ist, die den Eingang der Konstantstromquelle (10, 11) jedes Lichtquellenmoduls (2) beaufschlagt, **dadurch gekennzeichnet, dass** jedes Lichtquellenmodul (2) eine Kompensatorschaltung (14) zum Kompensieren eines Spannungsabfalls auf der Steuerleitung (5) an den in Reihe geschalteten Lichtquellenmodulen (2) aufweist, welche Kompensatorschaltung (14) ein Spannungsmessglied zum Ermitteln der am Lichtquellenmodul (2) aktuell anliegenden IST-Versorgungsspannung und ein Korrekturglied zum Korrigieren der IST-Steuerspannung in Abhängigkeit von der Differenz zwischen der IST-Versorgungsspannung und der nominalen SOLL-Versorgungsspannung aufweist.

2. Linearlichteinheit nach Anspruch 1, **dadurch gekennzeichnet, dass** für die Kompensation eines Spannungsabfalls auf der Steuerleitung (5) benötigten Berechnungen ein Rechenglied als Teil der Kompensatorschaltung (14) dient, dessen Ausgang an den Steuerleitungseingang der Kompensatorschaltung (14) des in der Reihenschaltung nachfolgenden Lichtquellenmoduls (2) angeschlossen ist.

3. Linearlichteinheit nach Anspruch 2, **dadurch gekennzeichnet, dass** das Rechenglied ein analog arbeitender Operationsverstärker (15) ist.

4. Linearlichteinheit nach Anspruch 3, **dadurch gekennzeichnet, dass** an dem invertierenden Eingang (24) des Operationsverstärkers (15) eine Spannung, die IST-Spannung auf der Steuerleitung (5) und an dem nicht-invertierenden Eingang (23) ein aus der Summe des Abbildes der IST-Versorgungsspannung und einer die Systemkonfiguration berücksichtigenden Referenzspannung ein die Systemkonfiguration berücksichtigendes Abbild der IST-Versorgungsspannung anliegen.

5. Linearlichteinheit nach Anspruch 4, **dadurch gekennzeichnet, dass** die Kompensatorschaltung (14) ein Korrekturglied zum Beschränken der Ausgangsspannung des Rechengliedes (15) auf einen zulässigen Wertebereich aufweist.

6. Linearlichteinheit nach Anspruch 5, **dadurch gekennzeichnet, dass** das Korrekturglied eine Widerstand-Dioden-Schaltung (27, 28, 29) mit einer von der Versorgungsspannung gespeisten Zener-Diode (27) und einer Siliziumdiode (29) ist.

7. Linearlichteinheit nach Anspruch 5 oder 6, **dadurch gekennzeichnet, dass** an den Ausgang des Rechengliedes (15) ein Dynamikglied zum Beeinflussen des Dynamikbereiches des Operationsverstärkers angeschlossen ist.

8. Linearlichteinheit nach Anspruch 7, **dadurch gekennzeichnet, dass** das Dynamikglied zumindest zwei Widerstände umfasst, die am Ausgang der Korrekturstufe des Rechengliedes angeordnet sind.

9. Verfahren zum Dimmen einer Linearlichteinheit (1) mit mehreren, über elektrische Leitungen (3, 4, 5) in Reihe geschalteten, durch jeweils eine Konstantstromquelle (10, 11) mit Gleichstrom versorgten Lichtquellenmodulen (2), wobei eine Leitung (4) die plus-Leitung, und eine weitere die minus-Leitung (3) und noch eine weitere eine Steuerleitung (5) ist, die den Eingang der Konstantstromquelle (10, 11) jedes Lichtquellenmoduls (2) beaufschlagt, **dadurch gekennzeichnet, dass** in jedem Lichtquellenmodul (2) ein Spannungsabfall auf der Steuerleitung (5) kompensiert wird, indem die an dem Lichtquellenmodul (2) anliegende IST-Versorgungsspannung erfasst, die Differenz zwischen der IST-Versorgungsspannung und der nominalen SOLL-Versorgungsspannung ermittelt und unter Zugrundelegung dieser Differenz die IST-Spannung auf der Steuerleitung (5) basierend auf der festgestellten Differenz korrigiert wird.

10. Verfahren nach Anspruch 9, **dadurch gekennzeichnet, dass** die Symmetrie der Verdrahtung bei der Bestimmung der Korrekturgröße zum Korrigieren eines Spannungsabfalls auf der Steuerleitung (5) als Konstante einfließt.

11. Verfahren nach Anspruch 10, **dadurch gekennzeichnet, dass** die Spannung auf der Steuerleitung (5) um die die Symmetrie der Verdrahtung beschreibende Konstante, multipliziert mit der Differenz zwischen der IST-Versorgungsspannung und der SOLL-Versorgungsspannung, angehoben wird.

12. Verfahren nach einem der Ansprüche 9 bis 11, **dadurch gekennzeichnet, dass** ein analoger Operationsverstärker (15) für die Berechnungen eingesetzt wird.

13. Verfahren nach Anspruch 12, **dadurch gekennzeichnet, dass** zur Beschränkung der Ausgangsspannung des Operationsverstärkers (15) dieser mittels einer aufgebauten Spannung gegengekoppelt wird.

## Claims

1. Linear lighting unit having a plurality of light source modules (2) which are connected in series via electrical lines (3, 4, 5) and are each supplied with direct current by a constant current source (10, 11), one line (4) being the plus line, and another being the minus line (3) and yet another being a control line (5) applying current to the input of the constant current source (10, 11) of each light source module (2), **characterised by the fact** that each light source module (2) has a compensator circuit (14) for compensating for a voltage drop on the control line (5) at the series-connected light source modules (2), which compensator circuit (14) has a voltage measuring element for determining the ACTUAL supply voltage currently present at the light source module (2) and a correction element for correcting the ACTUAL control voltage as a function of the difference between the ACTUAL supply voltage and the nominal SET supply voltage.

2. Linear lighting unit in accordance with Claim 1, **characterized by the fact** that the calculations required for the compensation of a voltage drop on the control line (5) are served by a computing element as part of the compensator circuit (14), the output of which is connected to the control line input of the compensator circuit (14) of the light source module (2) following in the series connection.

3. Linear lighting unit in accordance with Claim 2, **characterized by the fact** that the computing element is an operational amplifier (15) operating in analogue mode.

4. Linear lighting unit in accordance with Claim 3, **characterized by the fact** that a voltage, the ACTUAL voltage on the control line (5), is applied to the inverting input (24) of the operational amplifier (15) and an image of the ACTUAL supply voltage, which takes into account the system configuration, is applied to the non-inverting input (23) from the sum of the image of the ACUTAL supply voltage and a reference voltage which takes into account the system configuration.

5. Linear lighting unit in accordance with Claim 4, **characterized by the fact** that the compensator circuit (14) has a correction element for limiting the output voltage of the computing element (15) to an admissible range of values.

6. Linear lighting unit in accordance with Claim 5, **characterized by the fact** that the correction element is a resistor-diode cirucit (27, 28, 29) with a Zener diode (27) supplied by the supply voltage and a silicon diode (29).

7. Linear lighting unit in accordance with Claim 5 or 6, **characterized by the fact** that a dynamic element for influencing the dynamic range of the operational amplifier is connected to the output of the computing element (15).

8. Linear lighting unit in accordance with Claim 7, **characterized by the fact** that the dynamic element comprises at least two resistors arranged at the output of the correction stage of the computing element.

9. Method for dimming a linear lighting unit (1) having a plurality of light source modules (2) which are connected in series via electrical lines (3, 4, 5) and are each supplied with direct current by a constant current source (10, 11), one line (4) being the plus line, and another being the minus line (3) and yet another being a control line (5) applying current to the input of the constant current source (10, 11) of each light source module (2), **characterized by the fact** that a voltage drop on the control line (5) is compensated for in each light source module (2) by detecting the ACTUAL supply voltage applied to the light source module (2), determining the difference between the ACTUAL supply voltage and the nominal SET supply voltage, and using this difference to correct the ACTUAL voltage on the control line (5) based on the detected difference.

10. Method in accordance with Claim 9, **characterized by the fact** that the symmetry of the wiring is used as a constant in determining the correction variable for correcting a voltage drop on the control line (5).

11. Method in accordance with Claim 10, **characterized by the fact** that the voltage on the control line (5) is raised by the constant describing the symmetry of the wiring multiplied by the difference between the ACTUAL supply voltage and the SET supply voltage.

12. Method in accordance with any of Claims 9 to 11, **characterized by the fact** that an analogue operational amplifier (15) is used for the calculations.

13. Method in accordance with Claim 12, **characterized by the fact** that, in order to limit the output voltage of the operational amplifier (15), the latter is counter-coupled by means of a built-up voltage.

## Revendications

1. Unité d'éclairage linéaire comportant plusieurs modules de source lumineuse (2) qui sont montés en série par l'intermédiaire de lignes électriques (3, 4, 5) et qui sont alimentés chacun en courant continu par une source de courant constant (10, 11), une ligne (4) étant la ligne plus et une autre étant la ligne moins (3), et une autre encore étant une ligne de commande (5) qui agit sur l'entrée de la source de courant constant (10, 11) de chaque module de source lumineuse (2), **caractérisée en ce que** chaque module de source lumineuse (2) comporte un circuit compensateur (14) pour compenser une chute de tension sur la ligne de commande (5) au niveau des modules de source lumineuse (2) montés en série, lequel circuit compensateur (14) comporte un élément de mesure de la tension pour déterminer la tension d'alimentation RÉELLE actuellement présente au niveau du module de source lumineuse (2) et un élément de correction pour corriger la tension de commande RÉELLE en fonction de la différence entre la tension d'alimentation RÉELLE et la tension d'alimentation nominale CIBLE.

2. Unité d'éclairage linéaire selon la revendication 1, **caractérisée en ce que** les calculs nécessaires à la compensation d'une chute de tension sur la ligne de commande (5) sont servis par un élément de calcul faisant partie du circuit compensateur (14), dont la sortie est reliée à l'entrée de la ligne de commande du circuit compensateur (14) du module de source lumineuse (2) suivant dans le circuit série.

3. Unité d'éclairage linéaire selon la revendication 2, **caractérisée en ce que** l'élément de calcul est un amplificateur opérationnel (15) fonctionnant en mode analogique.

4. Unité d'éclairage linéaire selon la revendication 3, **caractérisée en ce qu'**une tension, la tension RÉELLE sur la ligne de commande (5), est appliquée à l'entrée inverseuse (24) de l'amplificateur opérationnel (15), et une image de la tension d'alimentation RÉELLE qui prend en compte la configuration du système est appliquée à l'entrée non inverseuse (23) à partir de la somme de l'image de la tension d'alimentation RÉELLE et d'une tension de référence qui prend en compte la configuration de système.

5. Unité d'éclairage linéaire selon la revendication 4, **caractérisée en ce que** le circuit compensateur (14) comporte un élément de correction pour limiter la tension de sortie de l'élément de calcul (15) à une plage de valeurs admissible.

6. Unité d'éclairage linéaire selon la revendication 5, **caractérisée en ce que** l'élément correcteur est un circuit résistance-diode (27, 28, 29) comprenant une diode Zener (27) alimentée par la tension d'alimentation et une diode au silicium (29).

7. Unité d'éclairage linéaire selon la revendication 5 ou 6, **caractérisée en ce qu'**un élément dynamique destiné à influencer la plage dynamique de l'amplificateur opérationnel est connecté à la sortie de l'élément de calcul (15).

8. Unité d'éclairage linéaire selon la revendication 7, **caractérisée en ce que** l'élément dynamique comprend au moins deux résistances disposées à la sortie du niveau de correction de l'élément de calcul.

9. Méthode de gradation d'une unité d'éclairage linéaire comportant plusieurs modules de source lumineuse (2) qui sont montés en série par l'intermédiaire de lignes électriques (3, 4, 5) et qui sont alimentés chacun en courant continu par une source de courant constant (10, 11), une ligne (4) étant la ligne plus et une autre étant la ligne moins (3), et une autre encore étant une ligne de commande (5) qui agit sur l'entrée de la source de courant constant (10, 11) de chaque module de source lumineuse (2), **caractérisée en ce qu'**une chute de tension sur la ligne de commande (5) est compensée dans chaque module de source lumineuse (2) en détectant la tension d'alimentation RÉELLE appliquée au module de source lumineuse (2), en déterminant la différence entre la tension d'alimentation RÉELLE et la tension d'alimentation nominale CIBLE, et en corrigeant la tension RÉELLE sur la ligne de commande (5) sur la base de cette différence.

10. Méthode selon la revendication 9, **caractérisée en ce que** la symétrie du câblage est incluse comme une constante dans la détermination de la variable de correction pour corriger une chute de tension sur la ligne de commande (5).

11. Méthode selon la revendication 10, **caractérisée en ce que** la tension sur la ligne de commande (5) est augmentée par la constante décrivant la symétrie du câblage multipliée par la différence entre la tension d'alimentation RÉELLE et la tension d'alimentation CIBLE.

12. Méthode selon l'une des revendications 9 à 11, **caractérisée en ce qu'**un amplificateur opérationnel analogique (15) est utilisé pour les calculs.

13. Méthode selon la revendication 12, **caractérisée en ce que,** pour limiter la tension de sortie de l'amplificateur opérationnel (15), ce dernier est contre-couplé au moyen d'une tension accumulée.
